(19) Europäisches Patentamt
European Patent Office
Office européen des brevets

(11) **EP 0 935 762 B1**

(12) **EUROPÄISCHE PATENTSCHRIFT**

(45) Veröffentlichungstag und Bekanntmachung des Hinweises auf die Patenterteilung:
**18.05.2005 Patentblatt 2005/20**

(21) Anmeldenummer: **98947493.7**

(22) Anmeldetag: **01.09.1998**

(51) Int Cl.$^7$: **G01S 7/292**, G01S 13/524

(86) Internationale Anmeldenummer:
**PCT/EP1998/005535**

(87) Internationale Veröffentlichungsnummer:
**WO 1999/012051 (11.03.1999 Gazette 1999/10)**

(54) **VERFAHREN ZUR DETEKTION EINES RADARZIELES**
METHOD FOR DETECTING A RADAR TARGET
PROCEDE POUR LA DETECTION D'UNE CIBLE RADAR

(84) Benannte Vertragsstaaten:
**AT CH DE FR GB IT LI**

(30) Priorität: **02.09.1997 DE 19738252**

(43) Veröffentlichungstag der Anmeldung:
**18.08.1999 Patentblatt 1999/33**

(73) Patentinhaber: **EADS Deutschland GmbH**
**81663 München (DE)**

(72) Erfinder: **HOFELE, Franz-Xaver**
**D-73072 Donzdorf (DE)**

(74) Vertreter: **Meel, Thomas et al**
**Patentassessor,**
**c/o Dornier GmbH**
**L H G**
**88039 Friedrichshafen (DE)**

(56) Entgegenhaltungen:
**EP-A- 0 107 588**
**DE-A- 19 600 086**
**US-A- 4 586 043**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung geht aus von einem Verfahren zur Detektion eines Radarzieles nach dem Oberbegriff des Patentanspruchs 1.

Der in dieser Patentanmeldung benutzte Begriff "Radarziel" ist ein Synonym (Kurzfassung) für den Ausdruck "ein mittels einer Radaranlage detektierbares (erfaßbares) Ziel". Dabei bedeutet "Ziel" einen Gegenstand, der Radarwellen reflektiert und der mindestens eine vorgebbare Eigenschaft besitzt, beispielsweise einen vorgebbaren minimalen Radar-Rückstreuquerschnitt überschreitet.

Die Erfindung ist insbesondere anwendbar auf die Detektion von Seezielen, beispielsweise Schiffen, die umgeben sind von möglichem sogenannten (Radar-)Clutter, der beispielsweise auf Meeres-Wellen und/oder Umwelteinflüssen, wie Wolken und/oder Niederschlägen, beruht.

Insbesondere bei der Detektion von Seezielen ist es bekannt, ein zu überwachendes Gebiet in Zellen (Meß-Fenster) mit vorgebbarer Fläche zu unterteilen. Jede Zelle enthält eine vorgebbare Anzahl von sogenannten Radar-Auflösungszellen. Es ist nahe liegend, zunächst mindestens ein Meßfenster, das lediglich (möglicherweise zeitabhängigen) Clutter enthält, auszuwählen und für diese Zelle (im Videosignal der Radaranlage) einen sogenannten Clutter-Schwellwert (im Videosignal) , der beispielsweise auf einer Clutter-Mittelwertsbildung innerhalb des Fensters beruht, zu bestimmen. Überschreitet nun im Videosignal ein vorgebbarer (Amplituden-)Puls diesen Clutter-Schwellwert, so wird dieser Puls zunächst als ein mögliches Echo eines Radarzieles (Seeziel) betrachtet und dann bedarfsweise einer weiteren Auswertung, beispielsweise einer Klassifikation und/oder Identifikation, zugeführt.

Aus EP 0 107 588 A1 ist ein solches Verfahren zur Detektion eines Radarzieles in Anwesenheit Clutter bekannt.

Es ist ersichtlich, dass bei der Detektion von Seezielen der zugehörige Clutter-Schwellwert sowohl zeit- als auch ortsabhängig ist. Denn die Wellenbewegung des Wassers kann sich zeitlich ändern, beispielsweise infolge eines aufkommenden Sturmes. Außerdem kann die Wellenbewegung und damit der Clutter, zumindest aus der Blickrichtung einer Radaranlage, örtlich unterschiedlich sein, beispielsweise im Nah- und Fernbereich unterschiedliche Werte annehmen. Derartige Bedingungen stören und erschweren die Detektion insbesondere von Seezielen erheblich.

Der Erfindung liegt die Aufgabe zugrunde, ein gattungsgemäßes Verfahren dahingehend zu verbessern, dass insbesondere bei der Detektion von Seezielen eine zuverlässige Ermittlung eines Clutter-Schwellwertes ermöglicht wird.

Diese Aufgabe wird gelöst durch die im kennzeichnenden Teil des Patentanspruchs 1 angegebenen Merkmale. Vorteilhafte Ausgestaltungen und/oder Weiterbildungen sind den weiteren Ansprüchen entnehmbar.

Ein erster Vorteil der Erfindung besteht darin, daß die Ermittlung des Clutter-Schwellwertes in einem weiten Bereich unabhängig ist von (Radar-)Zielen, die sich innerhalb desjenigen (Meß-)Fensters befinden, das zur Bestimmung des Clutter-Schwellwertes ausgewählt wurde. Es ist vorteilhafterweise nicht notwendig, die in diesem (Meß-)Fenster vorhandenen Zielamplituden (im Videobereich), welche den (Radar-)Zielen zugeordnet sind, auszublenden, beispielsweise mittels einer Verkleinerung der (Meß-)Fenster und einer Vergrößerung der auszuwertenden Anzahl. Das heißt, es ist vorteilhafterweise keine Kenntnis erforderlich, wo (Radar-)Ziele innerhalb des (Meß-)Fensters liegen, denn nur mit einer solchen (aufwendigen) Kenntnis ist eine Ausblendung möglich. Die Ermittlung des Clutter-Schwellwertes ist vorteilhafterweise sogar dann noch zuverlässig möglich, wenn in einem ausgewählten (Meß-)Fenster der Anteil der Zielamplituden einen Wert von ungefähr 50% aller auszuwertenden Amplituden annimmt.

Ein zweiter Vorteil besteht darin, daß das Verfahren nahezu unabhängig ist von dem Aufbau der Radaranlage, insbesondere des in dieser verwendeten Zielextraktors. Dieser enthält im allgemeinen eine digital arbeitende Datenverarbeitungsanlage, die vorzugsweise einen programmierbaren Mikroprozessor enthält. Soll nun beispielsweise eine vorhandene Radaranlage mit dem erfindungsgemäßen Verfahren nachgerüstet werden, so ist vorteilhafterweise lediglich eine Änderung des Programms (Software) der Datenverarbeitungsanlage erforderlich. Es müssen also vorteilhafterweise keine Baugruppen (Hardware) geändert werden.

Weitere Vorteile ergeben sich aus der nachfolgenden Beschreibung.

Die Erfindung wird im folgenden anhand von Ausführungsbeispielen näher erläutert unter Bezugnahme auf schematisch dargestellte Figuren. Es zeigen

Fig.1 und Fig.2 schematisch dargestellte Diagramme zur Erläuterung des Verfahrens.

Die Erfindung beruht auf der Verwendung eines an sich bekannten Radarziel-Extraktors, der im folgenden auch Seeziel-Extraktor genannt wird. Ein solcher Seeziel-Extraktor enthält in derzeit üblicher Weise eine digital arbeitende Datenverarbeitungsanlage. Ein Seeziel-Extraktor hat die Aufgabe, aus einem digitalisierten Videosignal, welches den empfangenen (Radar-)Echosignalen entspricht, diejenigen Echosignale auszuwählen, welche zu detektierenden Zielen, beispielsweise Schiffen zuzuordnen sind. Das heißt, es muß unterschieden werden zwischen Echosignalen, die von einem (See-)Ziel herrühren und solchen, die insbesondere von Clutter (Seegang) hervorgerufen werden.

Die in einem solchen Seeziel-Extraktor durchgeführte Seeziel-Extraktion besteht im wesentlichen aus einer schrittweisen Verringerung des ankommenden Datenstroms, bis letztendlich lediglich solche Daten ausgegeben werden, die einem Seeziel zuzuordnen sind. Für die Verringerung des Datenstromes werden vorgebbare Schwellwerte verwendet, mit denen unter vorgebbaren Bedingungen eine Weitergabe von störenden Daten verhindert wird.

Zur Unterdrückung von Clutter, der insbesondere auf Seegang (Wellenbewegung des Meeres) beruht, ist es zweckmäßig, einen daran angepaßten Clutter-Schwellwert zu verwenden, welcher auf einem Clutter-Modeli beruht, bei welchem die Clutter-Impulshöhen mittels einer (Impulshöhen-)Häufigkeitsverteilung beschrieben werden. Eine solche Häufigkeitsverteilung wird durch die Parameter Mittelwert M und Streuung S vollständig gekennzeichnet.

Bei der Seeziel-Extraktion ist es zweckmäßig, einen zentralen Schwellwert, der Treffererkennungsschwelle TEK genannt wird, zu verwenden, das heißt, alle Echoimpulse (im Videosignal), welche die Treffererkennungsschwelle TEK Überschreiten, werden als zu einem Seeziel gehörig betrachtet. Die Treffererkennungsschwelle TEK ist mit einer Falschalarmwahrscheinlichkeit $P_{fa}$ verknüpft entsprechend der Formel

$$P_{fa} = \int_{TEK}^{\infty} f(x)dx \qquad (1),$$

wobei f(x) die stetige Verteitungsdichtefunktion der vorliegenden Clutter-Verteilung VT bezeichnet. Unter der Annahme, dass der Seegang und damit die zugehörige Clutter-Verteilung einer Gauss-Verteilung mit dem Mittelwert $M=\mu$ und der Standardabweichung $S=\delta$ entspricht, ist es möglich, die Trefferwahrscheinlichkeit TEK aus dieser Gauss-Verteilung zu ermitteln entsprechend der Formel

$$TEK = \mu + \delta * K(P_{fa}) \qquad (2),$$

Beispielsweise ergibt sich bei einer vorgebaren Falschalarmwahrscheinlichkeit $P_{fa}=10^{-2}$ für die Konstante K der Wert

$$K(P_{fa}=10^{-2})=2{,}32.$$

Die Ermittlung der Treffererkennungsschwelle TEK wird im folgenden erläutert:

Wird beispielsweise ein Seegebiet in vorgebbarer Entfernung und mit vorgebbarer Fläche von einer Radaranlage abgetastet, so ist dieses als Meß-Fenster auf einem Anzeigeschirm darstellbar. Das Meßfenster enthält an sich Impulshöhenwerte (Echosignale), die Clutter- und Zielamplituden(im Videobereich) entsprechen.

Wird nun im Idealfall angenommen, daß in dem Meß-Fenster nur Clutteramplituden (nur von Clutter herrührend) vorhanden sind, so wird aus den zugehörigen (Clutter-)Impulshöhenwerten der Mittelwert M und die Standardabweichung S ermittelt. Daraus wird die Treffererkennungsschwelle TEK ermittelt entsprechend der Formel:

$$TEK = \text{Funktion}(M, S, P_{fa}) \qquad (3).$$

Ist nun die vorliegende Verteilung der (Clutter-)Impulshöhenwerte Gauss-artig, so geht die Formel (3) in die Formel (2) über und es kann TEK in der beschriebenen Weise ermittelt werden.

Im Realfall entstehen jedoch Störungen, beispielsweise infolge einer vorhandenen Deformation der Clutterverteilung, das heißt, diese ist nicht symmetrisch bezüglich des Mittelwertes M, und/oder in dem Meß-Fenster sind unbekannte (Ziel-)Impulshöhenwerte (von zu detektierenden Zielen herrührend) vorhanden.

Bei dem erfindungsgemäßen Verfahren werden nun alle Impulshöhenwerte, die innerhalb eines vorgebbaren Meß-Fensters liegen, ausgewertet, das heißt, Impulshöhenwerte, die Clutter entsprechen und solche die zu detektierenden Zielen gehören. Zu allen in quantisierter (digitalisierter) Form vorliegenden Impulshöhenwerten innerhalb des Meß-Fensters wird nun die Häufigkeit der Impulshöhen ermittelt, das heißt, es wird die zugehörige Verteilungsdichtefunktion VDF bestimmt. Daraus werden vorgebbare Kriterien, die nachfolgend noch näher erläutert werden, ermittelt und unter deren Berücksichtigung der Mittelwert M sowie die Standardabweichung S. Mit diesen wird die Treffererkennungsschwelle TEK dann entsprechend

Formel (3) ermittelt.

Diese Kriterien beruhen beispielsweise auf empirischen Erfahrungswerten, wobei beispielsweise

- eine an sich bekannte Deformation ( "Stutzung" ) der vorliegenden Impuishöhen-Verteilung aller Impulshöhenwerte innerhalb des aktuellen Meß-Fensters berücksichtigt wird;

- die vorhandene Bit-Anzahl des Analog/Digital-Wandlers, der zur Erzeugung der vorhandenen Impulshöhenwerte benutzt wird, berücksichtigt wird; von der gewählten Bit-Anzahl ist es abhängig, ob die Impulshöhenwerte mit feiner oder grober Abstufung ermittelt wurden.

Anhand der schematisch dargestellten Figuren wird nun die Ermittlung des Mittelwertes M und der Standardabweichung S unter Berücksichtigung der vorstehend beispielhaft erwähnten Kriterien näher erläutert.

Im folgenden wird davon ausgegangen, daß die von einer Radaranlage aus einem vorgebbarem Meßfenster empfangenen Echosignale (Clutter- und/oder Zietechos) in an sich bekannter Weise in den Videobereich herabgemischt werden, so daß ein amplitudenmoduliertes analoges Video-Signal entsteht. Dieses kann anschließend bedarfsweise analog gefiltert werden, beispielsweise mittels einer Schwellenschaltung, insbesondere einer als digitale Komponente ausgeführten CFAR-Schaltung, so daß beispielsweise vorgebbare Rauschanteile aus dem analogen Video-Signal entfernt werden. Dieses rauscharme analoge Video-Signal wird nun mittels eines Analog/Digital-Wandlers in zugehöriges digitalisiertes Video-Signal umgewandelt. Dabei erzeugt der Analog/Digital-Wandler aus einem analogen Amplitudenwert einen zugehörigen digitalen quantisierten Amlitudenwert AMP (Abszissen in Fig.1, Fig.2). Die maximale Anzahl L der möglichen Amplitudenwerte ist dabei abhängig von der Bit-Anzahl des verwendeten Analog/Digital-Wandlers entsprechend der Formel $L = 2^{\text{Bit-Anzahl}} - 1$.

In Fig.1 ist für ein aktuelles vorgebbares Meß-Fenster und die darin vorkommenden quantisierten Amplitudenwerte AMP, die von Clutter sowie von zu detektierenden Zielen herrühren können, die Häufigkeit $H_i$ (Ordinate), mit $i = 0, 1, 2, ..., L$, der Verteilungsdichtefunktion VDF (durchgezogene Linie in Fig.1) in Abhängigkeit von den möglichen quantisierten Amplitudenwerten AMP (Abszisse), welche durch die Bit-Anzahl des Analog/Digital-Wandlers bestimmt sind, aufgetragen. Aus Fig.1 ist ersichtlich, daß vorhandene Ziele, die beispielsweise einen Amplitudenwert größer 13 besitzen, nicht unmittelbar erkennbar sind, das heißt in Form von "Spitzen" in der Häufigkeitsverteilung, sondern über mehrere Amplitudenwerte verteilt sind, das heißt, für die Ziele ist eine "verschmierte" Darstellung in der Amplitudenverteilung vorhanden. Derzeit handelsübliche und für diese Anwendungen verwendbare Analog/Digital-Wandler sind beispielsweise mit Bit-Anzahlen von 4, 8, 16 oder 32 kostengünstig erhältlich. In Fig.1 wird lediglich aus Gründen der zeichnerischen Darstellung angenommen, daß bei der vorstehend erwähnten Schwellenschaltung ein Schwellwert Null vorhanden ist und die zu Clutter gehörigen quantisierten Amplitudenwerte eine Gauss-Verteilung besitzen, deren (Amplituden-)Mittelwert M bei dem quantisierten Amplitudenwert 7 liegt. Bei den quantisierten Amplitudenwerten größer als 13 liegen die zu detektierenden Zielen gehörenden quantisierten Amplitudenwerte. Es ist eine ersichtlich sehr grobe Quantisierung für die Amplitudenwerte vorhanden.

Aus Fig.1 ist ersichtlich, daß zu Clutter kleine Amplitudenwerte gehören, die aber, um den Mittelwert M herum, wesentlich größere Häufigkeiten Hi besitzen als die zu detektierenden Ziele.

Bei dem Verfahren werden nun folgende Verfahrensschritte durchgeführt:

1. Für alle in dem Meßfenster vorhandenen Echosignale (Clutter und Ziele) werden bei den zugehörigen digitalisierten Amplitudenwerten die zu jeweils einem quantisierten Amplitudenwert gehörenden Häufigkeiten $H_i$ ermittelt, so daß eine Verteilungsdichtefunktion entsteht. Dabei werden die Häufigkeiten $H_i$ beispielsweise in Prozentwerten angegeben, wobei die Summe aller Häufigkeiten $H_i$ innerhalb des Meßfensters gleich 100% ist. Dann gilt für den Mittelwert M, bei Annahme eines Gauss-verteilten Clutters, der quantisierten Amplitudenwerte die Formel

$$0{,}5 = \frac{\sum_{i=0}^{M} H_i}{\sum_{i=0}^{L} H_i}, \qquad (4)$$

mit $i = 0, 1, 2, ... L$ und $L = 2^{\text{Bit-Anzahl}} - 1$.

Für die Standardabweichung S gilt, bei Annahme eines Gauss-verteilten Clutters, die Formel

$$0,841345 = \frac{\sum_{i=0}^{M+S} H_i}{\sum_{i=0}^{L} H_i} \quad . \qquad (5)$$

Das bedeutet, daß der Mittelwert M bei demjenigen quantisierten Amplitudenwert liegt, an welchem die Verteilungsfunktion (VF) der quantisierten Amplitudenwerte den Wert 0,5 annimmt.

Der Amplitudenwert M+S liegt dann bei demjenigen quantisierten Amplitudenwert, an welchem die Verteilungsfunktion (VF) der quantisierten Amplitudenwerte den Wert 0,841345 annimmt.

Die angegebene 50%-Marke (für den Mittelwert M) und die 84%-Marke (für die Standardabweichung) gelten lediglich für eine Gauss-Verteilung des Clutters. Liegt nun, bedingt durch die Wahl der Signalverarbeitung des Clutters, aber eine andere als die Gauss-Verteilung vor, so müssen die "50%-Marke" und die "84%-Marke" an diese Verteilung angepaßt werden. Dieses ist theoretisch für jede beliebige Verteilung möglich.

2. Für die Anwendung ergibt sich aus den Formeln (4)und (5) folgende Anweisung:

Ausgehend von dem kleinsten quantisierten Amplitudenwert werden die Häufigkeiten $H_i$ der vorhandenen Verteilungsdichtefunktion VDF solange aufsummiert, bis 50% der in dem Meßfenster vorhandenen quantisierten Amlitudenwerte erfaßt sind. An dieser Stelle liegt dann der zu dem Mittelwert M gehörende quantisierte Amlitudenwert $i_M$.

Anschließend erfolgt eine weitere Aufsummation der Häufigkeiten $H_i$ solange, bis 84,1345% der in dem Meßfenster vorhandenen quantisierten Amlitudenwerte erfaßt sind. An dieser Stelle liegt dann der zu dem Wert M+S gehörende quantisierte Amlitudenwert $i_{M+S}$.

Die Standardabweichung S ist dann ermittelbar aus der Formel

$$S = i_{M+S} - i_M \qquad (6) .$$

3. Mit dem derart ermittelten Mittelwert M und der dann ermittelten Standardabweichung S wird dann entsprechend Formel (3) die Treffererkennungsschwelle TEK ermittelt.

Die Formeln (4) und (5) gelten für ein Modell, bei dem eine Gauss-Verteilung des Clutters angenommen wird. Ist der Clutter dagegen nicht Gauss-verteilt, sondern gehorcht (entspricht) einer anderen Verteilung, so sind die Formeln (2), (4) und (5) an diese Verteilung anzupassen.

Das beschriebene Verfahren der Ermittlung des Mittelwertes M und der Standdardabweichung S hat gegenüber ansonsten verwendeten M-S-Schätzverfahren folgende enorme Vorteile:

a) Die beschriebene Impulshöhenanalyse ist nicht auf eine Gauss-förmige Clutterverteilung beschränkt, sondern auf nahezu beliebige andere anwendbar, beispielsweise auf eine Clutterverteilung, die mehrere nahezu gleich hohe (relative) Maxima der quantisierten Amplitudenwerte besitzt. In einem solchen Fall ist es dann lediglich erforderlich, die entsprechend Formeln (4) und (5) erwähnten Kriterien an die vorhandene Verteilung anzupassen, beispielsweise mittels empirisch ermittelter Gewichtungsfaktoren. Ist die Verteilung nun nicht Gauss-förmig, so muß die Ermittlung der Treffererkennungsschwelle TEK durch eine entsprechend andere Formel als die Formel (2) modifiziert werden. Dieses ist in Formel (3) mit dem Begriff "Funktion(M, S, $P_{fa}$)" in allgemeiner Form dargestellt.

b) Das Verfahren ermöglicht eine technisch einfache, genaue und schnelle Ermittlung des Mittelwertes M und der Standardabweichung S, da lediglich mathematisch einfache Rechenoperationen durchgeführt werden müssen.

c) Es gehen vorteilhafterweise keine Zielamplituden in die Schätzung des Mittelwertes M und der Standardabweichung S ein, da Zielamplituden groß sind, also größer M+S größer M und da die Aufsummation der Häufigkeiten $H_i$ bei dem kleinsten quantisierten Amplitudenwert beginnt.

d) Für eine genaue Schätzung des Mittelwertes M und der Standardabweichung S ist es vorteilhafterweise nicht erforderlich, daß für Clutter eine vollständige Verteilungsdichtefunktion VDF vorhanden ist, sondern es kann auch entsprechend Fig.2 eine nach unten "gestutzte" Verteilung vorhanden sein. Eine solche tritt beispielsweise dann auf, wenn die eingangs erwähnten Rausch- und/oder CFAR-Schwellen so hoch gelegt werden, daß mit diesen Schwellen auch Clutter-Anteile unterdrückt werden.

Für das beschriebene Verfahren ist es in ersichtlicher Weise lediglich erforderlich, daß mindestens die Hälfte der Verteilungsfunktion zur Verfügung steht. Bei einer solchen "gestutzten" Verteilungsdichtefunktion VDF gehört dann zu dem kleinsten quantisierten Amplitudenwert eine nicht störende hohe Häufigkeit $H_0$, beispielsweise $H_0$ = 30%. Ausgehend von dieser hohen Häufigkeit $H_0$ wird dann bei dem Verfahren solange aufsummiert, bis die in den Formeln (4) und (5) angegebenen Werte erreicht sind. Im Extremfall ist sogar noch der Wert $i_M = 0$ zulässig.

e) Es ist vorteilhafterweise keine zusätzliche Konvertierung, beispielsweise mittels Tabellen, nötig, um insbesondere bei einer "gestutzten" Verteilungsdichtefunktion die gemessenen Werte für den Mittelwert M und die Standardabweichung S in die zugehörigen richtigen theoretischen Werte umzuwandeln.

Es ist ersichtlich, daß bei dem beschriebenen Verfahren vorteilhafterweise nahezu immer lediglich die Clutter-Verteilung erfaßt wird, denn es ist bekannt, beispielsweise aus empirischen Messungen, daß die zu möglichen Zielen gehörenden Ziel-Impulshöhenwerte mit einer wesentlich geringeren Häufigkeit aber mit wesentlich höheren quantisierten Amplitudenwerten als die Clutter-Impulshöhenwerte auftreten, vergleiche Fig.1 und Fig.2.

Clutteramplituden erscheinen in der Häufigkeitsverteilung bei kleinen Amplitudenwerten. Dagegen treten Zielamplituden im allgemeinen bei dagegen wesentlich größeren Amplitudenwerten auf.

Ist es nun bei Anwendungen möglich, daß mehr als ungefähr 8% der in einem Meßfenster befindlichen Amplituden als Zielamplituden zu werten sind, beispielsweise bei der ungünstigen Kombination: kleines Meßfenster und ferne Abtastung, so wird vermieden, daß die reellen Zielamplituden die Messung der Werte M und S verfälschen. Dieses erfolgt dadurch, daß in diesem Fall in den Formeln (4) und (5) die "100%-Marke" nicht durch die Aufsummation bis zu dem Wert L, das heißt

$$\sum_{i=0}^{L} H_i ,$$

definiert ist, sondern dadurch, daß die "100%-Marke" durch eine Aufsummation bis zu einem Wert P, mit $P<L$, beispielsweise $P = L/2$, festgestzt wird. Diese Festsetzung beruht darauf, daß die Wahrscheinlichkeit, insbesondere im Falle einer "gestutzten" Verteilung, daß Clutteramplituden größer gleich L/2 auftreten, vernachlässigbar gering ist.

Es ist ersichtlich, daß bei dem Verfahren in vorteilhafter Weise keine Bestimmung erforderlich ist, an welchen Orten innerhalb des Meß-Fensters sich Ziele befinden und an welchen Orten lediglich Clutter vorhanden ist. Das heißt, es ist keine Unterteilung des Meßfensters in kleinere Unterfenster nötig, die ansonsten benötigt werden, um Ziele zu erkennen.

Die Erfindung ist nicht auf die beschriebenen Ausführungsbeispiele beschränkt, sondern sinngemäß auf weitere anwendbar. So ist es mit dem Verfahren möglich, allgemeine Radarziele, die von sogenanntem Fest- und/oder Bewegtziel-Clutter umgeben sind, zu detektieren.

## Patentansprüche

**1.** Verfahren zur Detektion eines Radarzieles in Anwesenheit von Clutter, wobei

- die von einer Radaranlage empfangenen Echosignale, die Radarziele sowie Clutter enthalten, in den Videobereich umgesetzt werden derart, dass dort den Echosignalen entsprechende digitalisierte Impulshöhenwerte, welche den Amplituden der Echosignale im Videobereich entsprechen, vorliegen,
- die digitalisierten Impulshöhenwerte mittels eines Radarziel-Extraktors ausgewertet werden,
- in dem Radarziel-Extraktor ein Meß-Fenster mit vorgebbarer Größe gebildet wird, wobei das Meß-Fenster einem vorgebbarem zu überwachenden Gebiet mit vorgebbarer Fläche entspricht,
- für das Meß-Fenster aus den dort vorhandenen Impulshöhenwerten ein dem Clutter entsprechender Schwellwert ermittelt wird und
- anschließend die in dem Meß-Fenster gelegenen Impulshöhenwerte mit dem Schwellwert verglichen werden und ein Echo eines Radarzieles erkannt wird, wenn ein Impulshöhenwert den Schwellwert überschreitet, **da-**

**durch gekennzeichnet, dass**

- dass für alle Impulshöhenwerte innerhalb des Meß-Fensters eine Häufigkeitsverteilung ermittelt wird,
- dass ausgehend von dem kleinsten vorhandenen Impulshöhenwert mit der zugehörigen Häufigkeit $H_0$ eine Aufsummation der Häufigkeiten erfolgt solange, bis ein erster vorgebbarer Anteil, der bei einer Gauss-Verteilung 50% beträgt, aller in dem Meßfenster vorhandenen Impuls-Höhenwerte erfaßt ist,
- dass der zu diesem vorgebbaren ersten Anteil gehörende Impulshöhenwert iM ermittelt und als Mittelwert M aller Impulshöhenwerte innerhalb des Meßfensters festgesetzt wird,
- dass eine weitere Aufsummation der Häufigkeiten erfolgt solange, bis ein zweiter vorgebbarer Anteil, der bei einer Gauss-Verteilung 84% beträgt, aller in dem Meßfenster vorhandenen Impulshöhenwerte erfaßt ist,
- daß der zu diesem vorgebbaren zweiten Anteil gehörende Impulshöhenwert $i_{M+s}$ ermittelt wird,
- dass die Standardabweichung S ermittelt wird aus der Differenz von dem zu dem zweiten Anteil gehörende impulshöhenwert $i_{M+s}$ und dem zu dem ersten Anteil gehörende Impulshöhenwert $i_M$ entsprechend der Formel

$$S = i_{M+s} - i_M$$

- dass eine Treffererkennungsschwelle TEK ermittelt wird entsprechend der Formel

$$TEK = \text{Funktion}\ (M, S, P_{fa}),$$

wobei

Funktion = eine vorgebbare Funktion,
M = Mittelwert der Impulshöhenwerte,
S = die Standardabweichung und
$P_{fa}$ = eine vorgebbare Falschalarmwahrscheinlichkeit bedeuten und

- daß innerhalb des Meß-Fensters jeder Impulshöhenwert mit der Treffererkennungsschwelle TEK verglichen wird derart, daß ein Impulshöhenwert, der größer ist als die Treffererkennungsschwelle TEK als zu einem Radarziel gehörend festgelegt wird.

**2.** Verfahren zur Detektion eines Radarzieles nach Anspruch 1, dadurch gekennzeinet, daß bei einem Vorliegen einer Häufigkeitsverteilung, die von einer Gauss-Verteilung abweicht, der Mittelwert und die Standardabweichung in vorgebbarer Weise, abhängig von der Art der Häufigkeitsverteilung, abgeleitet wird.

**3.** Verfahren zur Detektion eines Radarzieles nach Anspruch 1 oder Anspruch 2, dadurch gekennzeinet, daß bei einer nicht Gauss-förmigen Häufigkeitsverteilung die Bildung der Treffererkennungsschwelle TEK in vorgebbarer Weise, abhängig von der vorliegenden Häufigkeitsverteilung, gewählt wird.

**4.** Verfahren zur Detektion eines Radarzieles nach einem der vorhergehenden Ansprüche zur Verwendung bei der Detektion eines Seezieles, wobei der Clutter im wesentlichen von der Wellenbewegung des Meeres herrührt.

## Claims

**1.** Method for the detection of a radar target in the presence of clutter, in which

- the echo signals which are received by a radar system and contain radar targets as well as clutter are converted to the video domain in such a way that digitized pulse level values which correspond to the echo signals there and correspond to the amplitudes of the echo signals in the video domain are present,
- the digitized pulse level values are evaluated by means of a radar target extractor,
- a measurement window with a predeterminable size is formed in the radar target extractor, with the measurement window corresponding to a predeterminable region to be monitored with a predeterminable area,
- a threshold value which corresponds to the clutter is determined from the pulse level values there for the measurement window, and
- pulse level values located in the measurement window are then compared with the threshold value and an echo of a radar target is identified when a pulse level value exceeds the threshold value,

<u>characterized in that</u>

- a probability distribution is determined for all the pulse level values within the measurement window,
- the probabilities are added up starting from the smallest pulse level value present with the associated probabilities $H_0$ as far as a first predeterminable component which is 50% in the case of a Gaussian distribution of all the pulse level values in the measurement windows is recorded,
- the pulse level value $i_M$ associated with this predeterminable first component is determined and is defined as the mean value M of all the pulse level values within the measurement window,
- a further addition of the probabilities is carried out until a second predeterminable component, which is 84% in the case of a Gaussian distribution, of all the pulse level values in the measurement window is recorded,
- the pulse level value $i_{M+s}$ which is associated with this predeterminable second component is determined
- the standard deviation S is determined from the difference between the pulse level value $i_{M+s}$ associated with the second component and the pulse level value $i_M$ associated with the first component, using the formula:

$$S = i_{M+s} - i_M$$

- a hit identification threshold TEK is determined using the formula

$$TEK = Function (M, S, P_{fa}),$$

where

Function = a predeterminable function,
M = the mean value of the pulse level values,
S = the standard deviation, and
$P_{fa}$ = a predeterminable false alarm probability, and

- **in that**, within the measurement window, each pulse level value is compared with the hit identification threshold TEK such that a pulse level value which is greater than the hit identification threshold TEK is defined as being associated with a radar target.

2. Method for detection of a radar target according to Claim 1, **characterized in that**, when a probability distribution which is not a Gaussian distribution occurs, the mean value and the standard deviation are derived in a predeterminable manner, depending on the nature of the probability distribution.

3. Method for detection of a radar target according to Claim 1 or Claim 2, **characterized in that**, if the probability distribution is not Gaussian, the formation of the hit identification threshold TEK is selected in a predeterminable manner, depending on the existing probability distribution.

4. Method for detection of a radar target according to one of the preceding claims for use for the detection of a sea target, with the clutter being caused essentially by the wave movement of the sea.

**Revendications**

1. Procédé pour la détection d'une cible radar en présence d'échos parasites, dans lequel

- les signaux des échos reçus par l'installation radar contiennent les cibles radar ainsi que des échos parasites qui sont transposés dans le domaine vidéo de telle sorte qu'il y ait à cet endroit des valeurs numérisées des hauteurs d'impulsion correspondant aux signaux des échos et qui correspondent aux amplitudes des signaux des échos dans le domaine vidéo,
- les valeurs numérisées des hauteurs d'impulsion sont exploitées au moyen d'un extracteur de cible radar
- dans l'extracteur de cible radar, on crée une fenêtre de mesure de dimension définissable, la fenêtre de mesure correspondant à un domaine définissable de surface définissable à surveiller,
- à partir des valeurs de hauteurs d'impulsions disponibles à cet endroit, on détermine pour la fenêtre de mesure, une valeur de seuil correspondant à l'écho parasite et

- on compare ensuite les valeurs de hauteurs d'impulsions situées dans la fenêtre de mesure avec la valeur de seuil et on reconnaît un écho d'une cible radar lorsqu'une valeur de hauteur d'impulsion dépasse la valeur de seuil,

**caractérisé en ce que**

- on détermine une distribution de fréquence pour toutes les valeurs de hauteurs d'impulsions à l'intérieur de la fenêtre de mesure,
- à partir de la plus petite valeur de hauteur d'impulsion disponible de fréquence $H_o$ correspondante, on effectue une sommation des fréquences jusqu'à ce qu'on ait enregistré une première partie définissable qui dans une distribution gaussienne, représente 50% de toutes les valeurs de hauteurs d'impulsions disponibles dans la fenêtre de mesure,
- on détermine la valeur de hauteur d'impulsion $i_M$ appartenant à cette première partie définissable et on la fixe comme valeur moyenne M de toutes les valeurs de hauteurs d'impulsions à l'intérieur de la fenêtre de mesure,
- on effectue une autre sommation des fréquences jusqu'à ce qu'on ait enregistré une deuxième partie définissable qui dans une distribution gaussienne, représente 84% de toutes les valeurs de hauteurs d'impulsions disponibles dans la fenêtre de mesure,
- on détermine la valeur de hauteur d'impulsion $i_{M+s}$ appartenant à cette deuxième partie définissable,
- on détermine l'écart type S à partir de la différence entre la valeur de hauteur d'impulsion $i_{M+S}$ appartenant à la deuxième partie et la valeur de hauteur d'impulsion $i_M$ appartenant à la première partie selon la formule

$$S = i_{M+S} - i_M$$

- on détermine un seuil de reconnaissance d'impact TEK selon la formule

$$TEK = \text{Fonction}\ (M, S, P_{fa})$$

Avec les significations suivantes

Fonction = une fonction définissable,
M = valeur moyenne des valeurs de hauteurs d'impulsions,
S = l'écart type et
$P_{fa}$ = une probabilité définissable de fausse alerte

- à l'intérieur de la fenêtre de mesure, on compare chaque valeur de hauteur d'impulsion avec le seuil de reconnaissance d'impact TEK de manière à établir qu'une valeur de hauteur d'impulsion qui est supérieure au seuil de reconnaissance d'impact TEK appartient à une cible radar.

**2.** Procédé pour la détection d'une cible radar selon la revendication 1, **caractérisé en ce qu'**en présence d'une distribution de fréquence qui s'écarte d'une distribution gaussienne, la valeur moyenne et l'écart type sont déduits de manière définissable en fonction de la nature de la distribution de fréquence.

**3.** Procédé pour la détection d'une cible radar selon la revendication 1 ou 2, **caractérisé en ce qu'**en présence d'une distribution de fréquence de forme non gaussienne, on choisit la constitution du seuil de reconnaissance d'impact TEK de manière définissable en fonction de la distribution de fréquence présente.

**4.** Procédé pour la détection d'une cible radar selon une des revendications précédentes pour l'utilisation pour la détection d'une cible marine, l'écho parasite provenant essentiellement du mouvement des vagues de la mer.

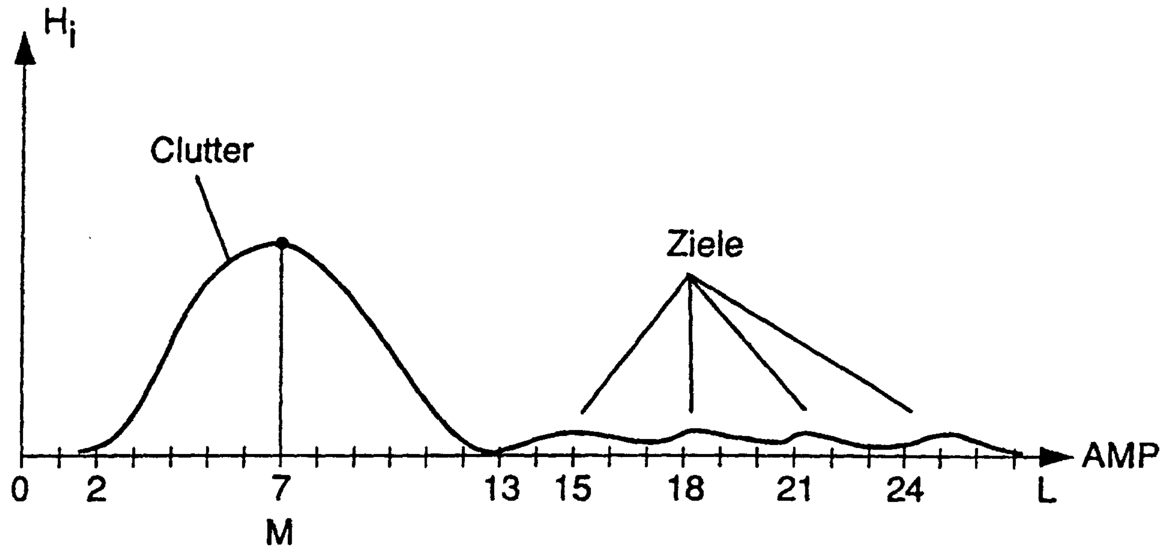
H_i
Clutter
Ziele
AMP
0
2
7
13
15
18
21
24
L
M

Fig. 1

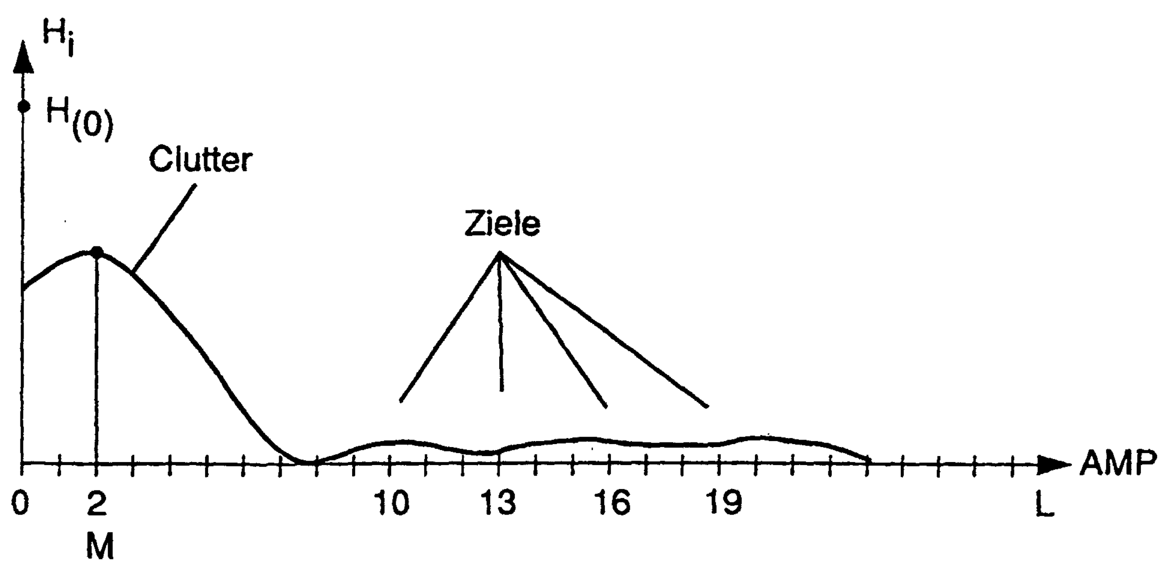
H_i
H_(0)
Clutter
Ziele
AMP
0
2
10
13
16
19
L
M

Fig. 2